(19) Europäisches Patentamt
European Patent Office
Office européen des brevets

(11) **EP 3 364 040 A1**

(12) **EUROPÄISCHE PATENTANMELDUNG**

(43) Veröffentlichungstag:
**22.08.2018 Patentblatt 2018/34**

(51) Int Cl.:
*F04D 29/28* (2006.01)     *F01D 5/04* (2006.01)
*F01D 5/14* (2006.01)     *F04D 29/02* (2006.01)

(21) Anmeldenummer: **17156162.4**

(22) Anmeldetag: **15.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Biesenbach, Martin**
**40225 Düsseldorf (DE)**
• **Bode, Ralf**
**47441 Moers (DE)**

(54) **ROTORBAUTEIL, VERFAHREN ZUR HERSTELLUNG**

(57) Die Erfindung betrifft ein Rotorbauteil (RPT) eines Rotors (RTR), insbesondere Laufrad (IMP) einer Radialturbomaschine (RTM), umfassend eine zu benetzende, zu mindestens 97% Flächenanteil geschlossene, strömungsführende Oberfläche einer Bauteilaußenwand (RPW), die im Betriebsfall von einem Prozessfluid (PF) überströmt wird und umfassend eine Befestigungsstruktur (FST), die eine formschlüssige und/oder kraftschlüssige Befestigung des Rotorbauteil (RPT) an einer Welle (SFH) des Rotors (RTR) ermöglicht, wobei das Rotorbauteil (RPT) mindestens einen Hohlraum (CVT) aufweist. Damit die Belastbarkeit des Rotorbauteil (RPT) erhöht wird, schlägt die Erfindung vor, dass der Hohlraum (CVT) allseitig umgeben von einem festen Material des Rotorbauteils (RPT) geschlossen ausgebildet ist.

FIG 1

**Beschreibung**

Die Erfindung betrifft ein Rotorbauteil eines Rotors, insbesondere Laufrad einer Radialturbomaschine, umfassend eine zu benetzende, zu mindestens 97% Flächenanteil geschlossene, strömungsführende Oberfläche einer Bauteilaußenwand, die im Betriebsfall von einem Prozessfluid überströmt wird und umfassend eine Befestigungsstruktur, die eine formschlüssige und/oder kraftschlüssige Befestigung des Rotorbauteil an einer Welle des Rotors ermöglicht, wobei das Rotorbauteil mindestens einen Hohlraum aufweist. Daneben betrifft die Erfindung auch ein Verfahren zur Herstellung eines entsprechenden Rotorbauteils.

Wichtige Leistungsparameter von Turbomaschinen, Radialturbomaschinen, insbesondere Turboverdichtern wie Wirkungsgrad, realisierbarer Massenstrom und Förderhöhe, hängen von der Drehzahl der Maschine ab. Bei der Auslegung solcher Maschinen ist die Drehzahl nach oben hin oft durch die Materialeigenschaften der rotierenden Teile, insbesondere der Verdichterlaufräder, begrenzt, wodurch wiederum die Freiheit bei der Auslegung insgesamt eingeschränkt ist. Die Anforderungen an die Festigkeit der Laufradwerkstoffe begründen sich ihrerseits aus der Fliehkraftbeanspruchung durch die Rotation. Kräfte, die vom strömenden Gas auf Laufräder ausgeübt werden, sind demgegenüber meist vernachlässigbar. Aus dem Zusammenhang von Drehzahl, Fliehkraft und Festigkeitsanforderungen ergeben sich zwei Lösungsansätze, die bisher verfolgt wurden:

1. Erhöhung der Werkstofffestigkeit, d.h. in der Regel der Streck- oder 0,2 %-Dehngrenze, bei gleichbleibendem spezifischen Gewicht.
2. Reduzierung der Dichte des Laufradmaterials bei gleichbleibender oder zumindest nicht im selben Maße wie die Dichte reduzierter Festigkeit, z. B. Anwendung von Titan- oder Aluminiumlegierungen.

Alternativ wurden Stahlsorten vorgeschlagen, die durch ihre Legierungszusammensetzung ein niedrigeres spezifisches Gewicht bei gleicher Festigkeit aufweisen.

Beispiele für derartige Ansätze finden sich in WO2010052052A1 (niedriges Gewicht), DE1433111B2 (niedriges Gewicht, hohe Festigkeit), DE1262613B (niedriges Gewicht, hohe Festigkeit).

Die Erfindung hat es sich daher zur Aufgabe gemacht, ohne zwingend neuartige Materialien zu benutzen den Einsatzbereich von Rotorbauteilen zu erweitern, insbesondere hin zu höheren Drehzahlen.

Zur Lösung der Aufgabe wird erfindungsgemäß vorgeschlagen, ein Rotorbauteil der eingangs definierten Art mit dem kennzeichnenden Teil des unabhängigen Vorrichtungsanspruchs fortzubilden. Hierzu wird bevorzugt ein erfindungsgemäßes Verfahren gemäß dem Verfahrensanspruch zur Herstellung eingesetzt. Die jeweils rückbezogenen Unteransprüche beinhalten vorteilhafte Weiterbildungen der Erfindung.

Bei dem von der Erfindung vorgeschlagenen Hohlraum handelt es sich um eine allseitig geschlossene Kavität in dem Rotorbauteil, das dementsprechend gewichtsreduziert ausgebildet ist. Bevorzugt handelt es sich um eine Vielzahl derartiger Hohlräume, die jeweils zueinander und nach außen hin abgeschlossen sind. Die Fertigung eines derartigen Rotorbauteils mit einem allseitig geschlossenen Hohlraum ist mittels herkömmlicher Verfahren nahezu nicht möglich aber nach der Erfindung mittels moderner additiver Fertigungsverfahren besonders vorteilhaft durchführbar. Besonders zweckmäßig kann hierzu ein Pulverbettverfahren eingesetzt werden.

Zu den gemäß der Erfindung einsetzbaren Pulverbettverfahren können gezählt werden: selektives Laserschmelzen (SLM), selektives Lasersintern (SLS), Selective Heat Sintering (SHS), Binder Jetting (Verfestigen von Pulvermaterial mittels Binder), Elektronenstrahlschmelzen (Electron Beam Melting = EBM). Eine andere Möglichkeit der Umsetzung der Erfindung liegt in der Anwendung eines Freiraumverfahrens, wie:

Fused Deposition Modeling (FDM oder auch Fused Filament Fabrication (FFF)), Auftragschweißen bzw. Cladding, Wax Deposition Modeling (WDM), Contour Crafting, Metall-PulverAuftragsverfahren (MPA), Kaltgasspritzen und Elektronenstrahlschmelzen (Electron Beam Welding = EBW).

Alternativ kann ein Flüssigmaterialverfahren eingesetzt werden, wie: Stereolithografie (SLA) + Mikro-SLA, Verfahren, welche Digital Light Processing (DLP) zur Belichtung nutzen und Liquid Composite Moulding (LCM).

Alternativ funktioniert hierzu auch:

Laminated Object Modelling (LOM), 3D-Siebdruck von Metallen und Lichtgesteuerte Elektrophoretische Abscheidung.

Die von dem Prozessfluid überströmte bzw. strömungsführende Oberfläche einer Bauteilaußenwand eines erfindungsgemäßen Rotorbauteils ist hierbei im Wesentlichen geschlossen ausgeführt. Ausnahmen zu der Schließung der Fläche können beispielsweise Öffnungen sein, mittels derer eine Filmkühlung über das umströmte Bauteil bereitgestellt wird. Dementsprechend kommt es zu einem geschlossenen Flächenanteil von etwa 97%, weil flächenmäßig die Öffnungen bei einer erfindungsgemäßen Ausführung nicht bedeutsam sind. Das Eindringen von Prozessfluid in das Rotorbauteil im Betrieb ist grundsätzlich unerwünscht. Besonders vorteilhaft kann daher die strömungsführende Oberfläche und/oder die von dem Prozessfluid benetzte Oberfläche der Bauteilaußenwand auch vollständig geschlossen ausgebildet sein.

Eine vorteilhafte Weiterbildung der Erfindung sieht vor, dass der Hohlraum von Hohlraumwänden definiert ist und eine Stabilisierungsstruktur aufweist, die mit den Hohlraumwänden fest verbunden ist und die Hohlraumwände zueinander abstützt. Dementsprechend kommt es einerseits zu einer vorteilhaften Gewichtsersparnis und andererseits zu kaum einer oder sogar gar keiner Einbuße in Sachen Tragfähigkeit bzw. Stabilität des Rotorbauteils. Synergetisch ergibt sich dadurch eine Erweiterung des möglichen Betriebsbereichs des Rotorbauteils in Folge der verbesserten Festigkeitseigenschaften und deren reduzierten Belastung durch Fliehkräfte in Folge der Reduktion der eigenen Masse.

Eine besonders vorteilhafte Weiterbildung sieht vor, dass der von den Hohlraumwänden definierte Hohlraum umfassend die Stabilisierungsstruktur zu einem Volumenanteil von höchstens 30% aus festem Material besteht. Hierbei ist davon auszugehen, dass dementsprechend mehr als 70% des Hohlraums eine vernachlässigbare Masse aufweisen und daher in dem Bereich des Hohlraums eine zumindest etwa 70%ige Gewichtsersparnis erfolgt.

Besonders zweckmäßig kann die Stabilität des Rotorbauteils trotz der Hohlräume nahezu unverändert aufrechterhalten werden, wenn die Stabilisierungsstruktur zu einem Masseanteil von wenigstens 30% als bionische Struktur ausgebildet ist. Bionische Strukturen haben den besonderen Vorteil, dass festes bzw. schweres Material genau dort eingespart wird, wo kein besonderer Beitrag zur Festigkeit durch das eingesparte Material erfolgt. Derartige Strukturen werden häufig durch die Untersuchung natürlich gewachsener Strukturen entwickelt. Ein Beispiel hierfür ist eine Honigwabenstruktur. In diesem Zusammenhang sind der sogenannte "Bottom-Up-Prozess" und der sogenannte "Top-Down-Prozess" bekannt, die der Anwendung derartiger Naturerkenntnisse bzw. Naturphänomene auf die Lösung technischer Probleme zugrundegelegt werden können. Weitere Ausführungen hierzu enthält beispielsweise die DE 102010013784 A1.

Eine andere vorteilhafte Weiterbildung der bionischen Struktur für die Erfindung sieht vor, dass zumindest teilweise Stützen Bestandteil der Struktur sind, deren Querschnitte einen Sicherheitsfaktor größer 1 ($S_F$>1) unter dem Betriebslastfall aufweisen, wobei für alle Volumenelemente bzw. Voxel X, Y, Z, die Element von dem Volumen der Stütze sind, gilt:

$$S_{FREF} < S_F(X, Y, Z) < 1,2*S_{FREF}.$$

mit

$S_{FREF}$: Referenz-Sicherheitsfaktor
$S_F(X, Y, Z)$: lokaler Sicherheitsfaktor für Voxel X, Y, Z.

Eine derartige Gestaltung der mechanischen Sicherheit hinsichtlich der Festigkeit unter einem Betriebslastfall entspricht der grundlegenden Vorgehensweise, Material dort einzusparen, wo es unter Festigkeitsaspekten unter dem Betriebslastfall nicht benötigt wird und synergetisch damit auch keinen ungünstigen Beitrag zu genau dem Betriebslastfall leistet.

Eine vorteilhafte Anwendung der Erfindung sieht vor, dass das Rotorbauteil eine Schaufel, insbesondere für eine Axialmaschine und die Befestigungsstruktur ein Schaufelfuß ist. Hierbei kann der Schaufelfuß besonders zweckmäßig als Schwalbenschwanzverbindungsteil ausgebildet sein. Entsprechende Schaufelfüße sind aus dem Stand der Technik bereits bekannt als Tannenbaumfüße, Hammerkopffüße oder sonstige formschlüssige bzw. hinterschnittene Befestigungen von Schaufeln an Rotoren. Das Rotorteil kann zweckmäßig eine Schaufel eines Verdichters oder einer Turbine sein.

Eine andere besonders bevorzugte Anwendung der Erfindung sieht vor, dass die Befestigungsstruktur eine Nabe ist.

Unter einer Nabe versteht die Erfindung ein Bauteil, das auf eine Welle geschoben wird. Sie besteht meist aus einem Werkstück mit einer Ausnehmung, in das die Welle einführbar ist. Die Ausnehmung kann mit einem Element, wie einer Passfeder, Keil, Pressverband, Schrumpfscheibe oder Spannsatz und/oder mittels einer Übermaßpassung mit der zugehörigen Welle verbunden werden. Die Nabe ist hierbei Bestandteil einer Welle-Nabe-Verbindung.

Hierbei ist es besonders zweckmäßig, wenn das Rotorbauteil ein Radialturbomaschinenlaufrad ist. Dieses Laufrad kann das Laufrad eines Radialturboverdichters oder eines Radialturboexpanders sein. Derartige Radialturbomaschinenlaufräder können vorteilhaft eine Radscheibe aufweisen, die die Nabe umfasst und wobei der mindestens eine Hohlraum Bestandteil der Randscheibe ist. Daneben kann ein derartiges Radialturbomaschinenlaufrad auch eine Deckscheibe aufweisen, wobei der mindestens eine Hohlraum auch Bestandteil der Deckscheibe sein kann. Entsprechend ist es möglich, sowohl in der Radscheibe als auch in der Deckscheibe als auch in Schaufeln, die die Radscheibe mit der Deckscheibe verbinden, entsprechende Hohlräume nach der Erfindung vorzusehen. Je weiter die Hohlräume radial außen liegen, desto größer ist der positive Effekt der Masseeinsparung in Folge der größeren Reduktion des Betriebslastfalls. In Folge der Erfindung kann es sogar möglich sein, weniger belastbare Materialien und ggf. preislich günstigere Materialien zu benutzen, da erfindungsgemäß die Belastung des Betriebslastfalls in Folge der Massereduktion geringer ausfällt. Die besondere Synergie der Erfindung liegt darin, dass die globale Festigkeitsanforderung an das Rotorbauteil gesenkt wird und die materialspezifische Festigkeitsanforderung ebenso. Dementsprechend ist es grade in Folge der Erfindung eher möglich auch die Erzeugung von Rotorbauteilen mittels des erfindungsgemäßen Verfahrens in Betracht zu ziehen, da insbesondere pulvermetallurgische Rotorbauteile aufgrund des verwendeten Pulvermaterials und des Fertigungsverfahrens Festigkeitsanforderungen an herkömmlich designte Rotorbauteile häufig nicht erfüllt haben. Dementsprechend ist das erfindungsgemäße Verfahren unter Erzeugung mindestens eines geschlossenen Hohlraums bei Verwendung additiver Fertigung in einem Pulverbettverfahren besonders zweckmäßig. Neben dem Pulverbettverfahren kann erfindungsgemäß auch ein Freiraumverfahren, ein Flüssigmaterialverfahren oder ein sonstiges Schichtbauverfahren - wie oben erläutert - angewendet werden.

Im Folgenden ist die Erfindung näher erläutert anhand spezieller Ausführungsbeispiele unter Bezugnahme auf Zeichnungen. Es zeigen jeweils schematisch vereinfacht:

Figur 1 einen Längsschnitt durch ein erfindungsgemäßes Rotorbauteil,

Figur 2 ein anderes erfindungsgemäßes Rotorbauteil,

Figur 3 einen erfindungsgemäßen Hohlraum,

Figur 4 ein Beispiel eines erfindungsgemäßen Verfahrens.

Bezeichnungen, wie axial, radial, tangential oder Umfangsrichtung beziehen sich stets - falls nicht anders angegeben - auf eine Achse X bzw. Rotorachse für ein erfindungsgemäßes Rotorbauteil RPT.

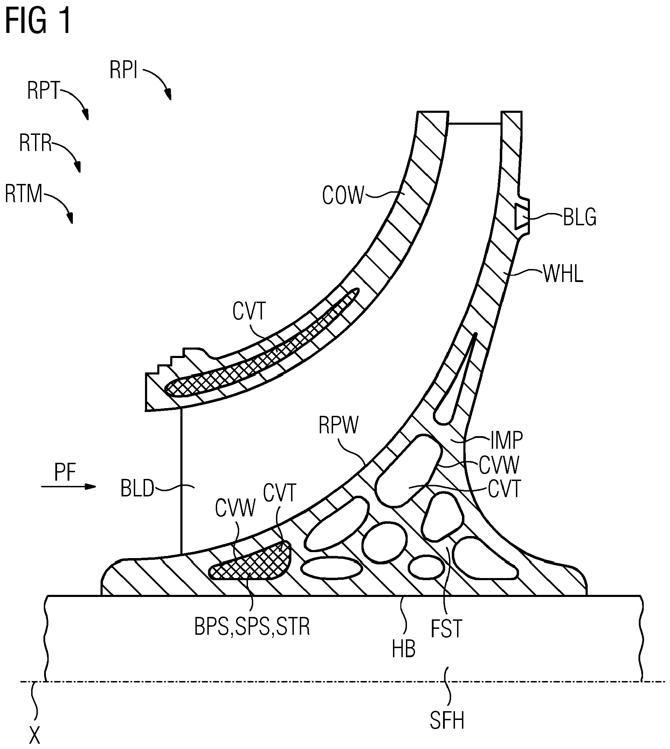

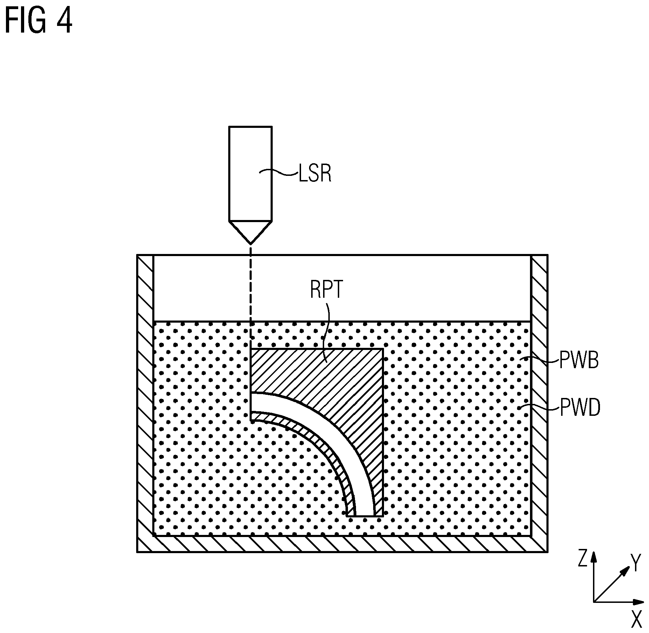

Figur 1 zeigt schematisch vereinfacht einen Längsschnitt durch ein erfindungsgemäßes Rotorbauteil RPT eines Rotors RTR ausgebildet als ein Laufrad IMP einer Radialturbomaschine RTM mit einer eine Nabe HB umfassenden Radscheibe WHL, Schaufeln BLD und einer Deckscheibe COW, wobei die Schaufeln BLD die Radscheibe WHL mit der Deckscheibe COW verbinden. Die Nabe HB dient der Befestigung des Laufrades IMP an einer sich entlang der Achse X erstreckenden Welle SFH. Im Betriebsfall strömt ein Prozessfluid PF entlang der zu zumindest 97% Flächenanteil geschlossenen, strömungsführenden Oberfläche einer Bauteilaußenwand RPW des Rotorbauteils RPT. Bevorzugt ist die strömungsführende Oberfläche als vollständig geschlossene Oberfläche ausgebildet. Die Nabe HB dient der kraftschlüssigen Befestigung des Rotorbauteils RPT an der Welle SFH, wobei alternativ oder zusätzlich eine formschlüssige Verbindung vorgesehen werden kann. Das Rotorbauteil RPT, hier sowohl die Radscheibe WHL als auch die Deckscheibe COW, weisen Hohlräume CVT auf, die allseitig von einem festen Material des Rotorbauteils RPT geschlossen umgeben ausgebildet sind. Eine derartige Struktur lässt sich insbesondere mit einem erfindungsgemäßen Verfahren, wie es in der Figur 4 dargestellt ist, realisieren.

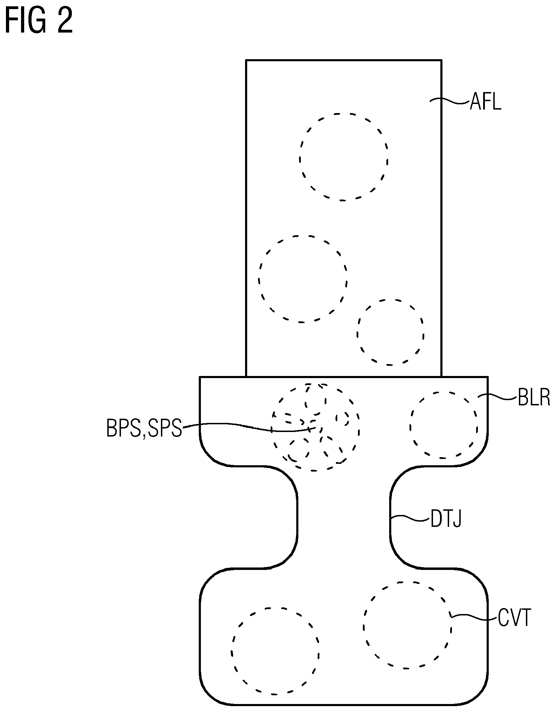

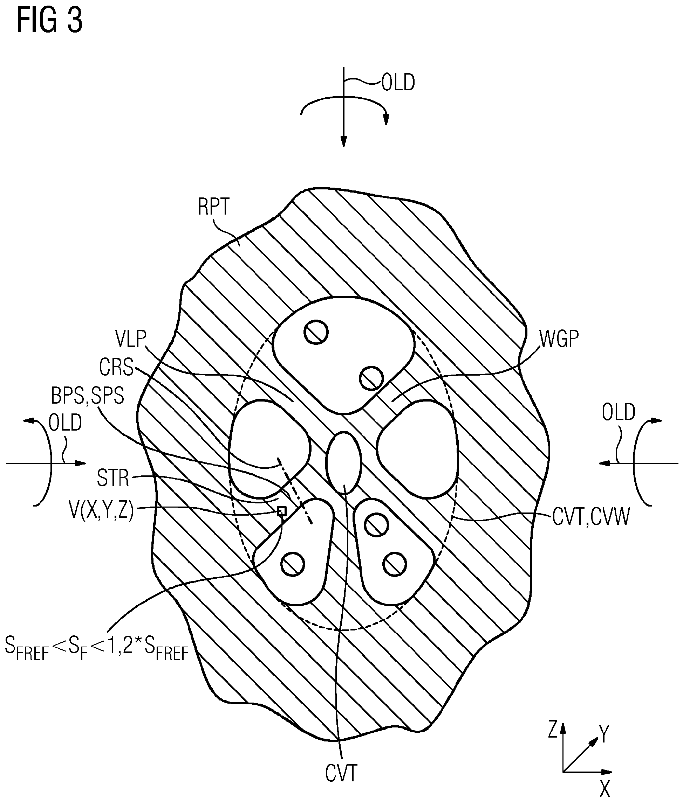

Der Hohlraum CVT ist hierbei von Hohlraumwänden CVW definiert, wie es im Detail in der Figur 3 wiedergegeben ist. Besonders bevorzugt und exemplarisch im einzelnen in der Figur 3 und auch in der Figur 1 sowie in der Figur 2 wiedergegeben, weist der Hohlraum CVT teilweise eine Stabilisierungsstruktur SPS auf, die mit den Hohlraumwänden CVW fest verbunden ist. Die Stabilisierungsstruktur SPS stützt die Hohlraumwände CVW zueinander ab, so dass trotz der Masseverringerung nahezu oder überhauptkeine Festigkeitseinbußen des Rotorbauteils RPT folgen.

Die Figur 3 zeigt schematisch exemplarisch, dass der von den Hohlraumwänden CVW definierte Hohlraum CVT umfassend die Stabilisierungsstruktur SPS zu einem Volumenanteil VLP von höchstens 30% die Stabilisierungsstruktur SPS umfassend aus festem Material besteht. Hierbei ist die Stabilisierungsstruktur SPS zu einem Masseanteil WGP von mindestens 30% als bionische Struktur BPS ausgebildet. Der in der Figur 3 als gestrichelte Linie zweidimensional wiedergegebene Hohlraum CVT bzw. die Hohlraumwände CVW umgeben hierbei die Stabilisierungsstruktur SPS, die als bionisches Fachwerk bzw. bionische Struktur BPS ausgebildet ist. Die bionische Struktur BPS umfasst hierbei Stützen STR, deren Querschnitte CRS einen Sicherheitsfaktor SF größer 1 unter dem Betriebslastfall OLD aufweisen. Der Betriebslastfall OLD ergibt sich bei einer Radialturbomaschine RTM im Wesentlichen aus den unter Betriebsdrehzahl an dem Bauteil angreifenden Fliehkräften. Die eigentlichen Kräfte aus der Durchströmung mittels des Prozessfluids PF sind dagegen eher vernachlässigbar. Die bionische Struktur BPS besteht zumindest teilweise aus Stützen STR, deren Querschnitte CRS einen Sicherheitsfaktor SF größer 1 unter dem Betriebslastfall OLD aufweisen, wobei für alle Voxel X, Y, Z, (Volumenelemente) die Element von dem Volumen der Stütze sind, gilt:

$$S_{F_{REF}} < S_F(X,\ Y,\ Z) < 1{,}2 * S_{F_{REF}}.$$

mit $S_{FREF}$: Referenz-Sicherheitsfaktor
$S_F(X, Y, Z)$: lokaler Sicherheitsfaktor für Voxel X, Y, Z.

Figur 2 zeigt das Rotorbauteil als Schaufel einer Axialturbomaschine, umfassend einen Schaufelfuß BLR, der als Schwalbenschwanzverbindungsteil DTJ ausgebildet ist. An dem Schaufelfuß BLR ist ein Schaufelblatt AFL befestigt. Sowohl Schaufelfuß BLR als auch Schaufelblatt AFL weisen erfindungsgemäße Hohlräume CVT auf. Teilweise sind diese Hohlräume CVT mit einer Stabilisierungsstruktur SPS bzw. bionischen Struktur BPS ausgerüstet.

Das erfindungsgemäße Verfahren zur Herstellung eines Rotorbauteils RPT ist in der Figur 4 vereinfacht beispielhaft als ein Pulverbettverfahren illustriert. Mittels eines Lasers LSR, der in einem Koordinatensystem XYZ relativ zu einem Pulverbett PWB verfahrbar ist, wird generativ das Rotorbauteil RPT aus Pulver PWD schichtweise erzeugt.

## Patentansprüche

1. Rotorbauteil (RPT) eines Rotors (RTR), insbesondere Laufrad (IMP) einer Radialturbomaschine (RTM), umfassend eine zu benetzende, zu mindestens 97% Flächenanteil geschlossene, strömungsführende Oberfläche einer Bauteilaußenwand (RPW), die im Betriebsfall von einem Prozessfluid (PF) überströmt wird und
umfassend eine Befestigungsstruktur (FST), die eine formschlüssige und/oder kraftschlüssige Befestigung des Rotorbauteil (RPT) an einer Welle (SFH) des Rotors (RTR) ermöglicht,
wobei das Rotorbauteil (RPT) mindestens einen Hohlraum (CVT) aufweist,
**dadurch gekennzeichnet, dass**
der Hohlraum (CVT) allseitig umgeben von einem festen Material des Rotorbauteils (RPT) geschlossen ausgebildet ist.

2. Rotorbauteil (RPT) nach Anspruch 1, wobei der Hohlraum (CVT) von Hohlraumwänden (CVW) definiert ist und eine Stabilisierungsstruktur (SPS) aufweist, die mit den Hohlraumwänden (CVW) fest verbunden ist und zueinander abstützt.

3. Rotorbauteil (RPT) nach Anspruch 2, wobei der von den Hohlraumwänden (CVW) definierte Hohlraum (CVT) umfassend die Stabilisierungsstruktur (SPS) zu einem Volumenanteil (VLP) von höchstens 30% aus festem Material besteht.

4. Rotorbauteil (RPT) nach Anspruch 2 oder 3, wobei die Stabilisierungsstruktur (SPS) zu einem Masseanteil (WGP) von mindestens 30% als bionische Struktur (BPS) ausgebildet ist.

5. Rotorbauteil (RPT) nach Anspruch 4, wobei die bionische Struktur (BPS) zumindest teilweise aus Stützen (STR) besteht, deren Querschnitte (CRS) einen Sicherheitsfaktor (SF) größer 1 unter dem Betriebslastfall (OLD) aufweisen, wobei für alle Voxel X, Y, Z, die Element von dem Volumen der Stütze sind, gilt:

$$S_{FREF} < S_F(X, Y, Z) < 1{,}2 * S_{FREF}.$$

mit

$S_{FREF}$: Referenz-Sicherheitsfaktor
$S_F(X, Y, Z)$: lokaler Sicherheitsfaktor für Voxel X, Y, Z.

6. Rotorbauteil (RPT) nach Anspruch 1, 2, 3, 4 oder 5, wobei die Befestigungsstruktur (FST) ein Schaufelfuß (BLR) ist.

7. Rotorbauteil (RPT) nach Anspruch 4, wobei der Schaufelfuß (BLR) als Schwalbenschwanzverbindungsteil (DTJ) ausgebildet ist.

8. Rotorbauteil (RPT) nach Anspruch 1, 2, 3, 4, 5, 6 oder 7, wobei die Befestigungsstruktur (FST) eine Nabe (HB) ist.

9. Rotorbauteil (RPT) nach Anspruch 8, wobei das Rotorbauteil (RPT) ein Radialturbomaschinenlaufrad (RTI) ist.

10. Rotorbauteil (RPT) nach Anspruch 9, wobei das Radialturbomaschinenlaufrad (RTI) eine Radscheibe (WHL) aufweist, die die Nabe (HB) umfasst und wobei der mindestens eine Hohlraum (CVT) Bestandteil der Radscheibe (WHL) ist.

11. Rotorbauteil (RPT) nach Anspruch 8 oder 9, wobei das Radialturbomaschinenlaufrad (RTI) eine Deckscheibe (COW) aufweist, wobei der mindestens eine Hohlraum (CVT) Bestandteil der Deckscheibe (COW) ist.

12. Verfahren zur Herstellung eines Rotorbauteils (RPT) nach einem der vorhergehenden Ansprüche 1 bis 10, wobei in einem Verfahrensschritt der mindestens eine geschlossene Hohlraum (CVT) mittels additiver Fertigung, insbesondere in einem Pulverbettverfahren, als Bestandteil des Rotorbauteils (RPT) hergestellt wird.

## FIG 1

RPI

RPT

RTR

RTM

COW

BLG

WHL

CVT

RPW

IMP
CVW
CVT

PF

BLD

CVW CVT

BPS,SPS,STR

FST

HB

SFH

X

FIG 2

AFL

BLR

BPS,SPS

DTJ

CVT

FIG 3

OLD

RPT

VLP

CRS

BPS,SPS
OLD

STR

V(X,Y,Z)

WGP

OLD

CVT,CVW

$S_{FREF} < S_F < 1,2 * S_{FREF}$

CVT

Z
Y
X

FIG 4

Europäisches Patentamt
European Patent Office
Office européen des brevets

**EUROPÄISCHER RECHERCHENBERICHT**

Nummer der Anmeldung

EP 17 15 6162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/124314 A1 (NUOVO PIGNONE SRL [IT]) 29. August 2013 (2013-08-29) * Seite 11, Zeile 12 - Seite 13, Zeile 8 * * Anspruch 1 * * Abbildungen 4,5 * | 1-5,8-12 | INV. F04D29/28 F01D5/04 F01D5/14 |
| X | DE 10 2013 220983 A1 (MTU AERO ENGINES AG [DE]) 16. April 2015 (2015-04-16) * Absätze [0010], [0017], [0028] - [0032], [0037], [0038] * * Abbildungen 1,2 * | 1-7,12 | ADD. F04D29/02 |
| X | EP 2 851 146 A1 (SIEMENS AG [DE]) 25. März 2015 (2015-03-25) * Absätze [0004], [0005], [0032], [0034], [0040] * * Abbildungen 9-11,17-20 * | 1-7,12 | |
| X | WO 2015/181080 A1 (NUOVO PIGNONE SRL [IT]) 3. Dezember 2015 (2015-12-03) * Seite 9, Zeile 7 - Seite 10, Zeile 11 * * Seite 15, Zeile 17 - Seite 16, Zeile 2 * * Anspruch 1 * * Abbildungen 1,2,5 * | 1,2,8-12 | |

RECHERCHIERTE SACHGEBIETE (IPC)

F04D
F01D
B22F

Der vorliegende Recherchenbericht wurde für alle Patentansprüche erstellt

| Recherchenort | Abschlußdatum der Recherche | Prüfer |
|---|---|---|
| Den Haag | 3. August 2017 | Gombert, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 3 364 040 A1**

**ANHANG ZUM EUROPÄISCHEN RECHERCHENBERICHT**
**ÜBER DIE EUROPÄISCHE PATENTANMELDUNG NR.**

EP 17 15 6162

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2017

| Im Recherchenbericht angeführtes Patentdokument | Datum der Veröffentlichung | Mitglied(er) der Patentfamilie | Datum der Veröffentlichung |
|---|---|---|---|
| WO 2013124314 A1 | 29-08-2013 | AU 2013224120 A1<br>CA 2864617 A1<br>CN 104284746 A<br>EP 2817117 A1<br>JP 6118350 B2<br>JP 2015510979 A<br>KR 20140130136 A<br>RU 2014133205 A<br>US 2015017013 A1<br>WO 2013124314 A1 | 28-08-2014<br>29-08-2013<br>14-01-2015<br>31-12-2014<br>19-04-2017<br>13-04-2015<br>07-11-2014<br>10-04-2016<br>15-01-2015<br>29-08-2013 |
| DE 102013220983 A1 | 16-04-2015 | KEINE | |
| EP 2851146 A1 | 25-03-2015 | KEINE | |
| WO 2015181080 A1 | 03-12-2015 | CN 106660122 A<br>EP 3148731 A1<br>JP 2017519106 A<br>US 2017189966 A1<br>WO 2015181080 A1 | 10-05-2017<br>05-04-2017<br>13-07-2017<br>06-07-2017<br>03-12-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010052052 A1
- DE 1433111 B2
- DE 1262613 B
- DE 102010013784 A1